# EUROPÄISCHE PATENTSCHRIFT

(11) **EP 2 512 981 B1**
(45) Veröffentlichungstag und Bekanntmachung des Hinweises auf die Patenterteilung: **25.06.2014**
(21) Anmeldenummer: 10794876.2
(22) Anmeldetag: 08.12.2010
(51) Int. Cl.: C01B 3/38

(54) **VERFAHREN ZUM BETREIBEN EINES REFORMEROFENS UND REFORMERANLAGE**
METHOD FOR OPERATING A REFORMER OVEN AND A REFORMER INSTALLATION
PROCÉDÉ PERMETTANT DE FAIRE FONCTIONNER UN FOUR DE REFORMAGE ET INSTALLATION DE REFORMAGE

(30) Priorität: 16.12.2009 DE 102009058687; 12.05.2010 DE 102010020406
(43) Veröffentlichungstag der Anmeldung: 24.10.2012
(73) Patentinhaber: Air Liquide Global E&C Solutions Germany GmbH, 60439 Frankfurt am Main (DE)
(72) Erfinder: POLSTER, Bernd, 60431 Frankfurt am Main (DE); RÖSCH, Alexander, 64293 Darmstadt (DE); SHAVER, Matthew, Houston, TX 77027 (US); ULBER, Dieter, 61449 Steinbach (DE); WOLF, Ulrich, 63329 Egelsbach (DE)
(86) Internationale Anmeldenummer: PCT/EP2010/007460
(87) Internationale Veröffentlichungsnummer: WO 2011/072815

(56) Entgegenhaltungen:
- EP-A2- 2 103 568
- EP-A2- 2 103 569
- DE-A1- 2 513 499
- DE-A1- 2 616 085
- US-A1- 2008 035 889

## Beschreibung

### Gebiet der Erfindung

Die Erfindung betrifft ein Verfahren zum Betreiben eines Reformerofens in einer Weise, die optimale Flexibilität bezüglich des als Sekundärprodukt der Dampfreformierung von Kohlenwasserstoffen erhaltenen Produktdampfs erlaubt. Die Erfindung betrifft ferner eine Anlage zur Durchführung des erfindungsgemäßen Verfahrens.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas dominierend.

Die Dampfreformierung von Erdgas verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Außenwände des Reformerofens sind dabei mit mehreren Schichten aus feuerfestem Material ausgekleidet oder zugestellt, das Temperaturen bis zu 1200 °C standhält. Die Reformerrohre werden zumeist mittels Brennern befeuert, die an der Oberseite oder Unterseite des Reformerofens angebracht sind und direkt den Zwischenraum zwischen den Reformerrohren befeuern. Dabei erfolgt der Wärmeübergang auf die Reformerrohre durch Wärmestrahlung und konvektive Wärmeübertragung der heißen Rauchgase.

Nach Vorerhitzung durch Wärmetauscher oder befeuerte Heizer auf ca. 500 °C tritt das Kohlenwasserstoff-Dampf-Gemisch nach Enderhitzung auf ca. 500 bis 800 °C in die Reformerrohre ein und wird dort am Reformierungskatalysator zu Kohlenmonoxid und Wasserstoff umgesetzt. Verbreitet sind Reformierungskatalysatoren auf Nickelbasis. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch nicht umgesetztes Methan sowie Wasserdampf.

Es sind verschiedene Ausführungsformen für Reformeröfen bekannt. In der deutschen Patentanmeldung DE 25 13 499 A1 wird ein Reformerofen zur katalytischen Reformierung von Kohlenwasserstoffen mit einer Brenneranordnung und mit einem Heizgaskonvektionsteil offenbart, in dem Katalysator enthaltene Reaktionsrohre angeordnet sind. In diesem Reformerofen ist ein feuerfester Einsatz enthalten, der die Strahlungswärme der Brenneranordnung von dem Konvektionsteil abschirmt. Ein zentral angeordnetes Auslaufrohr erstreckt sich durch die Decke des Reformerofens hindurch aufwärts und steht mit den Enden der Reaktionsrohre in Verbindung. Die Reaktionsrohre sind in einem Rohrboden aufgehängt. Dieser weist eine zentrale Öffnung auf, wobei der Rohrboden in seiner zentralen Öffnung mit dem Auslaufrohr verschweißt ist und wobei er mit der Innenwand des Reformierofens durch ein langgestrecktes Tragteil abdichtend verbunden ist.

Die deutsche Patentanmeldung DE 1616085 A1 lehrt ein Verfahren zum Erzeugen eines wasserstoffreichen Gases in einem Reformerofen, wobei ein Einsatzgemisch aus Kohlenwasserstoff und Wasserdampf unter einem Druck von 14,1 bis 42,2 ata durch katalysatorgefüllte Reformierrohre geführt und von außen durch Rauchgase auf eine Temperatur im Bereich von 538 °C bis 843 °C erhitzt wird, wobei die Reformerrohre in einer Konvektionskammer angeordnet sind, die von einer der Rauchgaserzeugung dienenden Brenneranordnung abgeteilt ist, so dass eine Wärmeabstrahlung der Brenneranordnung auf die Reformerrohre verhindert wird, und deren Beheizung durch Konvektionswärme erreicht wird, und wobei in der Konvektionskammer ein Druck von über 7,0 ata erhalten wird. Das Verfahren ist dadurch gekennzeichnet, dass die Rauchgaserzeugung in einem Brennerraum erfolgt, der am Boden des Ofens angeordnet ist und durch eine perforierte, feuerfeste Abschirmung, die die Wärmeabstrahlung aus dem Brenner-raum auf die Reformerrohre verhindert, von der Konvektionskammer abgeteilt ist, dass man die Rauchgase in die Konvektionskammer aufsteigen lässt, aus der Kammer abzieht und zum Erhitzen des Einsatzgemisches aus Kohlenwasserstoff und Dampf durch Wärmeaustausch verwendet, dann einen Teilstrom des Rauchgases nachverdichtet und in den Brennerraum zurückführt.

Das heiße Synthesegas-Produktgas wird nach Verlassen des Reformerofens in einem oder mehreren Wärmetauschern im indirekten Wärmetausch gegen einen Wasserstrom abgekühlt. Der Wasserstrom wird dabei verdampft und kann als Hochdruckdampf an Verbraucher innerhalb und außerhalb der Reformierungsanlage abgegeben werden. Im letztgenannten Fall wird der abgegebene Dampfstrom als Exportdampf bezeichnet. Beim Abkühlen der heißen Rauchgase wird weiterer Hochdruckdampf gewonnen, der ebenfalls als Exportdampf abgegeben werden kann. Das teilabgekühlte Synthesegas-Produktgas durchläuft anschließend noch weitere Konditionierungsschritte, die von der Art des gewünschten Produktes oder des nachgeschalteten Verfahrens anhängig sind.

Dampfreformierungsanlagen erzeugen daher in effizienter Weise zwei Hauptprodukte, nämlich Synthesegas und einen unter Umständen aus mehreren Teildampfströmen bestehenden Produktdampfstrom, der ganz oder teilweise als Exportdampf abgegeben wird. Dabei sind die Verbraucher des Synthesegas-Produktes (z. B. Wasserstofferzeugung, Oxosynthese, Erzeugung von CO) typischerweise nicht identisch mit den Abnehmern des Exportdampfes. Nachteilig ist dabei, dass daher Diskrepanzen zwischen der Synthesegas-Produktion und der Abnahme des Exportdampfes auftreten können, da die Produktionsraten der beiden Produkte Synthesegas und Produktdampf aneinander gekoppelt sind und die Produktionsrate des Exportdampfes nur in sehr geringem Maße angepasst werden kann. Insbesondere beim Teillastbetrieb des Dampfreformers kann die externen Verbrauchern zugesagte Exportdampfmenge unter Umständen nicht eingehalten werden. Ferner kann es wünschenswert sein, die abzugebende Exportdampfmenge zeitweilig abzusenken, wenn beispielsweise Betriebsstillstände oder Teillastfahrweise von Abnahmebetrieben auftreten.

Im Stand der Technik sind daher bereits Verfahren zur Dampfreformierung von Methan beschrieben worden, bei denen versucht wurde, eine Entkopplung der Exportdampfproduktion von der Synthesegasproduktion zu erreichen. So beschreibt die europäische Patentanmeldung EP 2103568 A2 ein Verfahren zur Dampfreformierung von Methan, bei dem praktisch kein Exportdampf an externe Verbraucher abgegeben wird. Erreicht wird dies dadurch, dass einerseits praktisch der gesamte produzierte Dampf im Reformierungsprozess selbst verbraucht wird. Andererseits wird die Dampferzeugung unter anderem dadurch minimiert, dass bei der Brennstoff im Reformerofen mittels sauerstoffangereicherter Luft verbrannt wird, wodurch sich der für den indirekten Wärmetausch mit Wasser-/Dampfströmen zur Verfügung stehende Massenstrom heißer Verbrennungsabgase verringert. Ferner wird vorgeschlagen, die im indirekten Wärmetausch gegen heißes Synthesegas-Produktgas bzw. heiße Verbrennungsabgase übertragene Wärmemenge für die Überhitzung eines Dampfstromes zu verwenden, der nachfolgend in einer Dampfturbine zur Energieerzeugung genutzt wird. Die hierbei gewonnene Energie kann dann wiederum zur Sauerstofferzeugung oder Sauerstoffanreicherung der Verbrennungsluft eingesetzt werden. Nachteilig ist hierbei das aufwändige Anlagenkonzept.

Ein ähnlicher Ansatz zur Minimierung des Dampfexports wird in der Patentschrift EP 2103569 A2 verfolgt. Neben dem weitgehend vollständigen Verbrauch des erzeugten Dampfes innerhalb des Reformers wird das Synthesegas-Produktgas nach Abkühlung einer Druckwechsel-Adsorption zugeführt, in der Kohlendioxid abgetrennt wird. Das erhaltene, an Wasserstoff angereicherte und daher bezügliche seines Heizwertes erhöhte Produktgas der Druckwechsel-Adsorption wird teilweise zum Reformerofen zurückgeführt und dort als Brennstoff eingesetzt Dies ist von Nachteil, da das aufwändig erzeugte, hochwertige Produkt Wasserstoff durch Verbrennen lediglich thermisch genutzt wird.

In Hydrocarbon Engineering (2001), 6(8), S. 47-50, beschreiben Grant et al. eine neue Dampfreformierungsanlage zur Wasserstoffproduktion, sowie die bei ihrer Konstruktion auftretenden Probleme hinsichtlich einzuhaltender Umweltanforderungen und der Begrenzung des Aufstellplatzes. Es wird ausgeführt, dass durch Kombination eines neuartigen Reformertyps in Kombination mit einer Vorreformereinheit unter anderem eine Verringerung des Exportdampfes erzielt werden konnte.

Der umgekehrte Fall, bei dem eine stabile, hohe Exportdampfmenge auch bei variablem Lastzustand bzw. Teillastfahrweise des Dampfreformers ermöglicht wird, wurde dagegen bislang im Stand der Technik nicht betrachtet. Gerade diese Fahrweise ist aber relevant bei integrierten Industriekomplexen, bei denen der Dampfreformer in zahlreiche, Exportdampf verbrauchende Nachbaranlagen eingebettet ist. Hier ist eine stabile Exportdampfabgabe von hoher Bedeutung für die Wirtschaftlichkeit des Gesamtprozesses. Ferner besteht aufgrund der oben beschriebenen Nachteile der Bedarf für ein alternatives Verfahren, bei dem auch bei Volllastbetrieb des Reformers die abgegebene Exportdampfmenge zumindest übergangsweise abgesenkt werden kann. Schließlich soll mit der Erfindung ein Verfahren zur Verfügung gestellt werden, bei dem die abgegebene Exportdampfmenge weiter gesteigert werden kann, auch wenn der Reformer bereits im Volllastbetrieb arbeitet.

### Beschreibung der Erfindung

Die Aufgabe der vorliegenden Erfindung besteht daher darin, ein Verfahren zum Dampfreformieren eines kohlenwasserstoffhaltigen Einsatzes zur Verfügung zu stellen, bei dem die Produktionsraten der beiden Produkte Synthesegas und Exportdampf von einander entkoppelt werden. Insbesondere soll mit der Erfindung ein Verfahren geschaffen werden, mit dem auch bei Teillastbetrieb der Dampfreformierung die volle Exportdampfmenge zur Verfügung gestellt werden kann. Ein alternatives Ziel der Erfindung ist es, ein Verfahren zur Verfügung zu stellen, mit dem bei Volllastbetrieb des Reformers die abgegebene Exportdampfmenge abgesenkt oder weiter gesteigert werden kann.

Die Lösung der erfindungsgemäßen Aufgabe ergibt sich im Wesentlichen aus den kennzeichnenden Merkmalen der Ansprüche 1 bis 3 in Zusammenwirken mit den Merkmalen des jeweiligen Oberbegriffs. Weitere vorteilhafte Ausgestaltungen der Erfindung ergeben sich aus den Unteransprüchen.

Die Rückführung eines Teils des Rauchgases, das durch Verbrennen des Brennereinsatzes in den Brennern des Reformerofens entsteht, zu den Brennern ist eine an sich bekannte Maßnahme bei der Dampfreformierung von Kohlenwasserstoffen. So wird in der deutschen Offenlegungsschrift DE 2513499 A ein neuartiger Reformerofen vorgeschlagen, bei dem die Wärmeübertragung auf die Reformerrohre im Wesentlichen nur konvektiv und nur zum untergeordneten Teil durch Wärmestrahlung erfolgt. Dies wird neben anderen, konstruktiven Maßnahmen dadurch erreicht, dass ein Teil des Rauchgases nach optionaler Nachverdichtung zu dem Ofen zurückgeführt, mit Brennstoff und Verbrennungsluft vermischt und den Brennern wieder zugeführt wird. Die Teilrückführung der Rauchgase zur einer Verbrennung ist ferner eine bekannte Maßnahme in der Verbrennungskraftwerkstechnik, sie wird dort zur Minderung der Emission von CO und Stickoxiden angewandt. Es wurde nun gefunden, dass die Rückführung eines Teils des Rauchgases in überraschender Weise zu der Lösung der erfindungsgemäßen Aufgabe führt, wenn die Größe des Rauchgas-Rückführstroms einstellbar ist und in Beziehung zu der Synthesegas-Produktionskapazität des Dampfreformers gebracht wird. Unter der Synthesegas-Produktionskapazität wird dabei der Massenstrom des Synthesegas-Produktgases verstanden.

Erfindungsgemäß kann der Massenstrom des rückgeführten Rauchgases bei sinkendem Massenstrom des Synthesegas-Produktgases, beispielsweise bei Teillastbetrieb des Reformers, in der Weise erhöht werden, dass durch Erhöhung des zweiten Teildampfstroms ein konstanter oder annähernd konstanter Produktdampfstrom erhalten wird. Andererseits kann erfindungsgemäß der Massenstrom des rückgeführten Rauchgases bei konstantem Massenstrom des Synthesegas-Produktgases in der Weise abgesenkt werden, dass durch Absenkung des zweiten Teildampfstroms ein abgesenkter Produktdampfstrom erhalten wird. Schließlich ist in alternativer Ausgestaltung der Erfindung vorgesehen, den Massenstrom des rückgeführten Rauchgases bei konstantem Massenstrom des Synthesegas-Produktgases in der Weise zu erhöhen, dass durch Erhöhung des zweiten Teildampfstroms ein erhöhter Produktdampfstrom erhalten wird.

Durch die beschriebenen Ausgestaltungen der Erfindung wird die Exportdampfproduktion von der Synthesegasproduktion entkoppelt, und somit eine optimale Flexibilität der abgegebenen Dampfmenge ermöglicht.

Wenn der Dampfreformer in Teillast betrieben wird, sinkt gegenüber dem Normalbetrieb sowohl der Massenstrom des Synthesegas-Produktgases als auch der erste Teildampfstrom, der durch Abkühlung des heißen Synthesegas-Produktgases in einem Wärmetauscher im indirekten Wärmetausch gegen einen Wasserstrom erzeugt wird. Hierdurch sinkt auch die insgesamt produzierte Dampfmenge, die sich aus dem ersten Teildampfstrom und einem zweiten Teildampfstrom zusammensetzt, der durch Abkühlung des heißen Rauchgases in einem Wärmetauscher im indirekten Wärmetausch gegen einen Wasserstrom erzeugt wird. Um die Abnahme der Dampfproduktion bei gewünschter, konstanter Produktdampfmenge bzw. Exportdampfmenge zu kompensieren, wird der Rauchgas-Rückführstrom zum Reformerofen in der Weise erhöht, dass durch Erhöhung des zweiten Teildampfstroms ein konstanter oder annähernd konstanter Produktdampfstrom erhalten wird. Erfindungsgemäß wird dies dadurch erreicht, dass im Abgasweg des Rauchgases nach erfolgtem Wärmetausch und vor Eintritt in die Abgasentsorgung ein Rauchgas-Teilstrom abgezweigt und mittels einer zusätzlichen Fördervorrichtung zum Reformerofen zurückgeführt wird. Bevorzugt wird dieser Rauchgas-Teilstrom dem Verbrennungsluftstrom an geeigneter Stelle zugemischt. Hierdurch erhöht sich der den Reformerofen verlassende Rauchgas-Massenstrom und dadurch auch der Wärmestrom im für die Dampfproduktion im Rauchgasweg eingesetzten Wärmetauscher. Durch diese Maßnahme ist eine Erhöhung der Dampfproduktion möglich, so dass durch Erhöhung des zweiten Teildampfstroms ein konstanter oder annähernd konstanter Produktdampfstrom erhalten wird.

Um eine konstante Dampfproduktion bei Teillastbetrieb des Reformers zu gewährleisten, wird der zurückgeführte Massenstrom des Rauchgases bevorzugt in umgekehrtproportionaler Weise zu dem sinkenden Massenstrom des Synthesegas-Poduktgases erhöht. Übergangsweise ist es mit der Erfindung sogar möglich, selbst bei Außerbetriebnahme der Synthesegaserzeugung durch Unterbrechen der Zuführung des kohlenwasserstoffhaltigen Einsatzes zu den Reformerrohren eine konstante Dampfproduktion aufrechtzuerhalten. Auf diese Weise werden Investitionen für einen zusätzlichen Abhitzekessel und/oder zusätzliche Stützbrenner zur Erhöhung der Dampfproduktion im Rauchgasweg eingespart. Ein weiterer Vorteil der Erfindung besteht in der Absenkung der Stickoxidemissionen aufgrund der Teilrückführung der Rauchgase, die zu einer umweltfreundlichen Betriebsweise des Dampfreformers beitragen. Berechnungen haben zudem ergeben, dass sich die erfindungsgemäße Betriebsweise des Reformerofens im Vergleich zum Einsatz von Stützbrennern durch eine höhere Energieeffizienz und daher durch geringere spezifische Kohlendioxid-Emissionen auszeichnet. Die Zuverlässigkeit des Anlagenbetriebs des Dampfreformers bleibt unberührt, da jederzeit die Durchführung des Verfahrens in konventioneller Weise ohne erfindungsgemäße Rückführung der Rauchgase möglich ist.

Wenn der Dampfreformer in Volllast betrieben wird (Normalbetrieb), besitzen sowohl der Massenstrom des Synthesegas-Produktgases als auch der erste Teildampfstrom, der durch Abkühlung des heißen Synthesegas-Produktgases in einem Wärmetauscher im indirekten Wärmetausch gegen einen Wasserstrom erzeugt wird, die der Anlagenauslegung zugrundeliegenden Normwerte. Eine positive oder negative Änderung des Massenstroms des Produktdampfs bzw. der abzugebenden Exportdampfmenge kann dann erfindungsgemäß dadurch erreicht werden, dass der Rauchgas-Rückführstrom zum Reformerofen variiert wird. Um den Produktdampf-Massenstrom gegenüber dem Normalbetrieb zu erhöhen, wird dann der der Rauchgas-Rückführstrom zum Reformerofen ebenfalls erhöht. Eine Absenkung des Produktdampf-Massenstrom gegenüber dem Normalbetrieb wird durch eine Absenkung des zum Reformerofen zurückgeführten Rauchgas-Massenstroms erreicht. Die letztgenannte Maßnahme setzt allerdings voraus, dass bereits im Normalbetrieb des Reformers der Reformerofen mit RauchgasRückführung betrieben wird, damit ein entsprechendes Potential für eine Absenkung des zum Reformerofen zurückgeführten Rauchgas-Massenstroms vorhanden ist. Wiederum wird erfindungsgemäß die Rauchgas-Rückführung zum Reformerofen so realisiert, dass im Abgasweg des Rauchgases nach erfolgtem Wärmetausch und vor Eintritt in die Abgasentsorgung ein Rauchgas-Teilstrom abgezweigt und mittels einer zusätzlichen Fördervorrichtung zum Reformerofen zurückgeführt wird.

### Bevorzugte Ausgestaltungen der Erfindung

Die Rückführung des Rauchgas-Rückführstroms wird bevorzugt durch Installation einer zusätzlichen Fördervorrichtung ermöglicht. Besonders bevorzugt wird die Rückführung des Rauchgas-Rückführstroms mittels einer Fördervorrichtung mit einstellbarer Förderleistung erfolgt. Hierzu kann ein regelbares Gebläse oder ein regelbarer Verdichter eingesetzt werden.

Um erfindungsgemäß den Massenstrom des rückgeführten Rauchgases dem sinkendem Massenstrom des Synthesegas-Produktgases anzupassen oder bei Volllastbatrieb des Reformers weiter zu steigern oder abzusenken, wird besonders bevorzugt ein Gebläse mit regelbarer Förderleistung eingesetzt. Alternativ kann zur Einstellung des Massenstroms des rückgeführten Rauchgases auch ein einem Gebläse mit fester Fördermenge nachgeschaltetes Regelventil eingesetzt werden, wobei es sich dann empfiehlt, einen Bypass um das Gebläse zu schalten, um dieses mit annähernd konstantem Vordruck betreiben zu können.

Bevorzugt erfolgt die Einbindung der zusätzlichen Fördervorrichtung im Abgasweg des Rauchgases nach erfolgtem Wärmetausch und vor Eintritt in die Abgasentsorgung. Besonders bevorzugt wird die zusätzliche Fördervorrichtung auf der Druckseite eines bereits vorhandenen Rauchgas-Gebläses angeordnet.

Grundsätzlich empfiehlt es sich, beim erfindungsgemäßen Betrieb der Reformeranlage mit Teilrückführung der heißen Rauchgase die Wärmetauscher im Rauchgasweg für höhere Betriebstemperaturen auszulegen. Dies kann beispielsweise durch Auswahl eines hochtemperaturbeständigeren Konstruktionsmaterials für diese Wärmetauscher erfolgen.

Bevorzugte Ausgestaltungen der Erfindung sehen vor, das rückgeführte Rauchgas der Verbrennungsluft zuzugeben. Aus diese Weise wird eine besonders gute Vermischung des rückgeführten Rauchgases mit der Verbrennungsluft erreicht; dies unterstützt die gleichmäßige Verbrennung des Brennereinsatzes. Weitere Ausgestaltungen der Erfindung sehen dabei vor, dass der Rauchgas-Rückführstrom der Verbrennungsluft vor und/oder nach ihrer Vorerwärmung zugegeben wird. Besonders bevorzugt wird es dabei, den Rauchgas-Rückführstrom der Verbrennungsluft auf mehrere Zugabestellen verteilt zuzugeben. Hierdurch kann die Temperaturführung des Rauchgas-Nerbrennungsluftstromes optimiert und die Energieeffizienz des Verfahrens weiter gesteigert werden.

Gemäß einer besonders bevorzugten Ausgestaltungsform der Erfindung wird das rückgeführte Rauchgas der vorerhitzten Verbrennungsluft zugegeben. Auf diese Weise wird das nach Wärmetausch abgekühlte Rauchgas vor Zugabe zum Brennereinsatz vorerhitzt, wodurch die Energieeffizienz des Verfahrens verbessert wird. Bei mehrstufiger Vorerhitzung der Verbrennungsluft kann die Zugabe nach jeder Vorerhitzungsstufe, aber auch verteilt zu mehreren Vorerhitzungsstufen erfolgen.

Um insbesondere bei der Durchführung des Verfahrens gemäß Anspruch 1 eine möglichst zeitnahe und automatische Anpassung des rückgeführten Rauchgasstroms an Änderungen des Synthesegas-Produktstroms bzw. des ersten Teildampfstroms zu ermöglichen, ist in Weiterbildung der Erfindung vorgesehen, eine auf die zusätzliche Fördervorrichtung wirkende Regelung vorzusehen, in die als Regelgröße der Massenstrom des Synthesegases und/oder des ersten Teildampfstroms eingeht, und deren Führungsgröße der Sollwert für den zurückzuführenden Rauchgas-Massenstroms und/oder für den zweiten Teildampfstrom ist. In weiterer Weiterbildung der Erfindung ist vorgesehen, den Verbrennungsluft-Massenstrom mittels Regelung dem zurückgeführten Rauchgas-Massenstrom anzupassen, um auch bei Brennerbetrieb mit RauchgasRückführung die Verbrennung mit optimalem Luftüberschuss durchführen zu können.

Die Regelung kann dann auch dazu verwendet werden, um bei Teillastfahrweise das Dampf/Kohlenstoffverhältnis automatisch zu erhöhen, indem der Dampfanteil im Reformereinsatz überproportional zum Kohlenwasserstoffanteil gesteigert wird. Diese Maßnahme bewirkt ferner eine Kühlung des oder der Wärmetauscher im Rauchgasweg bei dem gleichzeitig gesteigerten Rauchgas-Massenstrom aufgrund der Rückführung des Rauchgases. Hierdurch wird die thermische Materialbeanspruchung des oder der Wärmetauscher verringert. Eine ähnliche Schutzwirkung für den oder die Wärmetauscher im Rauchgasweg kann auch durch die Installation eines ersten, gegebenenfalls leicht austauschbaren Vorwärmetauschers erreicht werden, durch den die heißen Rauschgase bei Verlassen des Reformerofens strömen. Der Vorwärmetauscher kann im indirekten Wärmetausch gegen einen Wasserstrom zur Dampferzeugung oder gegen einen Dampfstrom zu dessen Überhitzung verwendet werden. Der erzeugte oder überhitzte Dampf kann dem zweiten Teildampfstrom beigegeben werden.

Eine weitere Schutzmaßnahme für die Wärmetauscher im Rauchgasweg besteht darin, als Wärmeaustauschmedium den vorzuerhitzenden Reformereinsatz zu verwenden, wobei zwischen den Wärmertauscherstufen ein Quenchen mit kaltem Reformereinsatz erfolgt (inter-stage quench).

Die Erfindung betrifft auch eine Anlage zur Dampfreformierung eines kohlenwasserstoffhaltigen Einsatzes unter Abgabe von Exportdampf. Sie ist gekennzeichnet durch
- einen Reformerofen mit Brennern und eine Vielzahl von Katalysator enthaltenden Reformerrohren,
- mindestens einen Wärmetauscher zum Abkühlen eines heißen Synthesegas-Produktgasstroms im indirekten Wärmetausch gegen einen Wasserstrom unter Bildung eines abgekühlten heißen Synthesegas-Produktgasstroms und eines ersten Teildampfstroms,
- eine Meßvorrichtung zur Messung des Massenstroms des Synthesegas-Produktgases,
- mindestens einen Wärmetauscher zum Abkühlen eines heißen Rauchgasstroms im indirekten Wärmetausch gegen einen Wasserstrom unter Bildung eines abgekühlten Rauchgasstroms und eines zweiten Teildampfstroms,
- eine Meßvorrichtung zur Messung des Massenstroms des rückgeführten Rauchgases,
- eine Meßvorrichtung zur Messung des Produktdampf-Massenstroms,
- eine Fördervorrichtung mit einstellbarer Förderleistung zur Rückführung des Rauchgas-Rückführstroms zum Reformerofen.

In einer besonderen Ausgestaltung der erfindungsgemäßen Anlage ist vorgesehen, als Fördervorrichtung ein Gebläse zu verwenden.

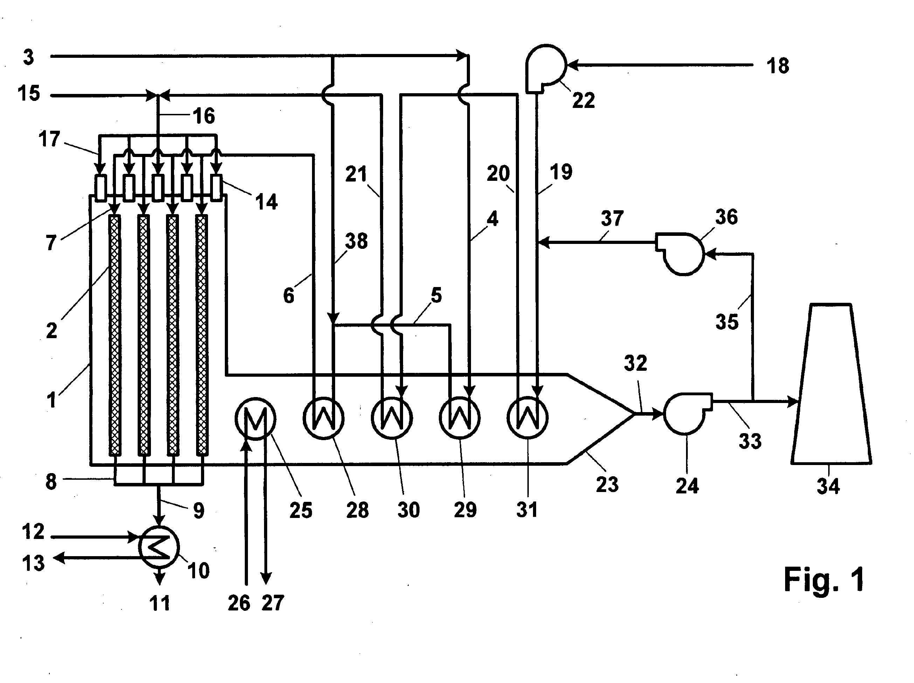

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigt die einzige Figur schematisch das erfindungsgemäße Verfahren gemäß einer bevorzugten Ausgestaltungsform. Der Reformerofen 1 enthält eine Vielzahl von mit Katalysator gefüllten Reformerrohren 2. Üblicherweise beträgt die Zahl der Reformerrohre mehrere hundert; in der Figur werden aus Übersichtlichkeitsgründen nur vier Reformerrohre dargestellt. Der verwendete Katalysator ist ein Nickel-basierter, kommerziell erhältlicher Reforming-Katalysator. Über Leitungen 3, 4, 5, 6 und 7 werden die Reformerrohre mit vorerhitztem, kohlenwasserstoffhaltigem Erdgas als Reformereinsatz beschickt. Die Eintrittstemperatur des Reformereinsatzes beträgt 500 °C. Vor Eintreten des Reformereinsatzes in den Reformer wird diesem Dampf beigemischt (nicht gezeigt in der Figur), so dass ein definiertes Dampf/Kohlenstoffverhältnis von 3 mol/mol vorliegt. Nach Umsetzen des Einsatzes in den Reformerrohren wird das Wasserstoff, CO und nicht umgesetzte Erdgasbestandteile enthaltende, gasförmige Reformerprodukt über Leitungen 8 und Sammelleitung 9 abgezogen und im Wärmetauscher 10 abgekühlt, wobei ein abgekühltes Reformerprodukt erhalten und über Leitung 11 abgezogen wird. Die Abkühlung erfolgt im indirekten Wärmetausch gegen einen über Leitung 12 herangeführten Wasserstrom 12, aus dem durch Verdampfen im Wärmetauscher 10 ein erster Teildampfstrom 13 erhalten wird.

Die Reformerrohre werden mittels einer Vielzahl von Brennern 14 befeuert, die an der Oberseite des Reformerofens angebracht sind und den Zwischenraum zwischen den Reformerrohren befeuern. Aus Übersichtlichkeitsgründen werden in der Figur nur fünf Brenner dargestellt. Im vorliegenden Beispiel werden die Brenner 14 mit Erdgas als Brennstoff betrieben, das über Leitungen 15, 16 und Verteilungsleitungen 17 den Brennern zugeführt wird. Die Verbrennungsluft wird über Leitungen 18, 19, 20 und 21 herangeführt und dem Brennstoff in Leitung 16 zugemischt. Zur Förderung der Verbrennungsluft dient das Gebläse 22.

Im Reformerofen 1 erfolgt der Wärmeübergang auf die Reformerrohre durch Wärmestrahlung und konvektive Wärmeübertragung der heißen Rauchgase. Nach erfolgter Wärmeübertragung treten die Rauchgase in den Abhitzeteil 23 des Reformerofens 1 ein. Die Förderung der Rauchgase durch den Abhitzeteil des Reformerofens erfolgt im Saugzug des Gebläses 24. Im Abhitzeteil des Reformerofens erfolgt die weitere Abkühlung der Rauchgase durch mehrere Wärmetauscher im Rauchgasweg, wobei die Enthalpie der Rauchgase zur Erzeugung eines zweiten Teildampfstromes sowie zur mehrstufigen Vorwärmung des Reformereinsatzes und der Verbrennungsluft genutzt wird. Bezüglich der Dampferzeugung ist in der Figur exemplarisch der Wärmetauscher 25 dargestellt, in dem die heißen Rauchgase im indirekten Wärmetausch gegen einen über Leitung 26 herangeführten Wasserstrom gekühlt werden, wobei ein Dampfstrom erzeugt wird, der über Leitung 27 als zweiter Teildampfstrom abgezogen wird. Alternativ kann die Abkühlung der Rauchgase im Wärmetauscher 25 gegen einen Dampfstrom erfolgen, wobei dann über Leitung 27 überhitzter Dampf abgezogen wird. Im Abhitzeteil 23 des Reformerofens befinden sich weitere, aus Übersichtlichkeitsgründen in der Figur nicht dargestellte Wärmetauscher, mit deren Hilfe ebenfalls Dampf erzeugt wird, der dem zweiten Teildampfstrom zugegeben wird. Die Summe der im Abhitzeteil des Reformerofens erzeugten Dampfströme bildet dabei den zweiten Teildampfstrom.

Nach Passieren der zur Vorwärmung des Reformereinsatzes und der Verbrennungsluft dienenden Wärmetauscher 28 bis 31 verlassen die abgekühlten Rauchgase über Leitung 32 den Abhitzeteil des Reformerofens und werden mittels Gebläse 24 über Leitung 33 der Rauchgasentsorgung 34 zugeführt. Die Temperatur der über Leitung 33 abgeleiteten Rauchgase beträgt noch 100 bis 250 °C. Aus Leitung 33 wird mittels Gebläse 36 ein Rauchgas-Teilstrom über Leitung 35 entnommen und über Leitung 37 dem Verbrennungsluftstrom in Leitung 19 zugeführt. Alternativ kann der Rauchgas-Teilstrom auch der vorerhitzten Verbrennungsluft in den Leitungen 20 oder 21 zugegeben werden. Auch die verteilte Zugabe auf mehrere der Leitungen 19, 20 oder 21 ist möglich, wodurch die Energieeffizienz des Verfahrens und die Temperaturführung des Gasgemischs aus Verbrennungsluft und rückgeführtem Rauchgas weiter verbessert wird. Der Massenstrom des rückgeführten Rauchgases beträgt zwischen 0 und 60 % des maximalen Rauchgasstromes bei Volllastbetrieb der Reformeranlage.

In Weiterbildung der Erfindung wird über Leitung 38 ein Teil des kalten Reformereinsatzes abgezogen und dem im Wärmetauscher 29 vorerhitzten und über Leitung 5 herangeführten Reformereinsatz als Quench beigegeben. Hierdurch wird die thermische Belastung des nachgeschalteten, bei höherer Rauchgastemperatur arbeitenden Wärmetauschers 28 verringert.

### Zahlenbeispiele

Um die Vorteile des erfindungsgemäßen Verfahrens zu verdeutlichen, werden in der nachfolgenden Tabelle Zahlenbeispiele wiedergegeben, bei denen wichtige Betriebsparameter einer Reformeranlage mit unterschiedlichen Lastzuständen und Rauchgas-Rückführverhältnissen miteinander verglichen werden. Das Vergleichsbeispiel demonstriert den Volllastbetrieb des Reformers mit nomineller Wasserstoffproduktion ohne Rauchgasrückführung. Beispiel 1 zeigt die Bedingungen bei Volllastbetrieb des Reformers mit erfindungsgemäßer Teilrückführung der Rauchgase, Beispiel 2 dokumentiert einen Teillastbetrieb des Reformers mit erfindungsgemäßer Teilrückführung der Rauchgase. Wie sich anhand der in Tabelle wiedergegebenen Betriebsdaten der Reformeranlage bzw. des Reformerofens deutlich erkennen lässt, kann durch Rückführung von 10 % der Rauchgase bei Vollastbetrieb des Reformers der Exportdampfstrom um 39 % gesteigert werden (Beispiel 1). Alternativ kann bei Teillastbetrieb des Reformers durch Rückführung von 12 % der Rauchgase der Exportdampfstrom gegenüber dem Vollastbetrieb praktisch konstant gehalten bzw. noch leicht gesteigert werden.

**Tabelle: Reformerbetrieb mit unterschiedlichen Lastzuständen und Rauchgas-Rückführverhältnissen. Vergleichsbeispiel: Volllast (nominelle Wasserstoffproduktion) ohne Rauchgasrückführung, Beispiel 1: Volllast mit Teilrückführung der Rauchgase, Beispiel 2: Teillast mit Teilrückführung der Rauchgase**

| **Größe** | **Einheit** | **Vergleichsbeispiel (Vollast Reformer, ohne Recycle)** | **Beispiel 1 (Vollast Reformer)** | **Beispiel 2 (Teillast Reformer)** |
|---|---|---|---|---|
| Reformereinsatz | - | Erdgas | Erdgas | Erdgas |
| Brennstoff | - | Erdgas | Erdgas | Erdgas |
| Thermischer Wirkungsgrad | - | 1,17 | 1,15 | 1,16 |
| T Reformereintritt | °C | 500 | 500 | 500 |
| T Reformeraustritt | °C | 870 | 870 | 870 |
| Dampf/Kohlenstoff-Verhältnis | mol/mol | 3,0 | 3,0 | 3,0 |
| Luftüberschuss Verbrennung | % | 10 | 10 | 10 |
| T Rauchgas vor Abhitzeteil Reformerofen | °C | 1033 | 1069 | 1015 |
| T Rauchgas Eintritt Dampferzeuger | °C | 780 | 850 | 795 |
| T Rauchgas vor Gebläse 24 | °C | 138 | 144 | 151 |
| Rauchgasstrom | kmol/h | 7010 | 8836 | 7199 |
| Rückgeführter Rauchgasstrom | kmol/h | 0 | 884 | 884 |
| **Rückführverhältnis Rauchgas** | **%** | **0** | **10** | **12** |
| **Wasserstoff-Produktstrom** | **Nm3/h** | **60000** | **60000** | **50000** |
| **Exportdampfstrom** | **kg/h** | **62900** | **87300** | **64600** |

### Gewerbliche Anwendbarkeit

Mit der Erfindung wird somit ein verbessertes Verfahren zur Dampfreformierung eines kohlenwasserstoffhaltigen Einsatzes zur Verfügung gestellt, das sich durch seine hohe Flexibilität bezüglich der Erzeugung von Exportdampf auszeichnet, und das es gestattet, auch bei Teillastbetrieb des Dampfreformers einen annähernd konstanten Produktdampfstrom zur Verfügung zu stellen, der ganz oder teilweise als Exportdampf an externe Verbraucher abgegeben werden kann. Alternativ kann mit der Erfindung bei Volllast-betrieb des Reformers die abzugebende Exportdampfmenge abgesenkt oder weiter gesteigert werden. Zudem führt die Rückführung des Rauchgases zu den Brennern im Reformierofen zu einer Minderung der Stickoxidemissionen, und somit zu einem umweltfreundlicheren Betrieb der Anlage.

### Bezugszeichenliste

- 1: Reformerofen
- 2: Reformerrohre
- 3 bis 9: Leitung
- 10: Wärmetauscher
- 11 bis 13: Leitung
- 14: Brenner
- 15 bis 21: Leitung
- 22: Gebläse
- 23: Abhitzeteil Reformerofen
- 24: Gebläse
- 25: Wärmetauscher
- 26 bis 27: Leitung
- 28 bis 31: Wärmetauscher
- 32 bis 33: Leitung
- 34: Rauchgasentsorgung (Kamin)
- 35: Leitung
- 36: Gebläse
- 37 bis 38: Leitung

## Patentansprüche

1. Verfahren zur Herstellung eines Synthesegas-Produktgases und mindestens eines Produktdampfstromes durch katalytisches Dampfreformieren eines kohlenwasserstoffhaltigen Einsatzes in einem Dampfreformer mit variabler Produktionskapazität des Synthesegas-Produktgases, wobei der Dampfreformer eine Vielzahl von Katalysator enthaltenden Reformerrohre und einen Reformerofen mit Brennern zur Befeuerung der Reformerrohre umfaßt, wobei der heiße Synthesegas-Produktgasstrom in mindestens einem Wärmetauscher im indirekten Wärmetausch gegen einen Wasserstrom unter Bildung eines abgekühlten Synthesegas-Produktgasstroms und eines ersten Teildampfstroms abgekühlt wird, wobei der erste Teildampfstrom dem Produktdampfstrom zugeführt wird,
und wobei der Betrieb des Reformierungsofens folgende Schritte umfaßt:
(a) Zuführen von Brennstoff, Verbrennungsluft und mindestens eines RauchgasRückführstroms zum Reformerofen unter Bildung eines Brennereinsatzes,
(b) Verbrennen des Brennereinsatzes in den Brennern unter Bildung eines heißen Rauchgasstroms,
(c) Abkühlen des heißen Rauchgasstroms in mindestens einem Wärmetauscher im indirekten Wärmetausch gegen einen Wasserstrom unter Bildung eines abgekühlten Rauchgasstroms und eines zweiten Teildampfstroms, der dem Produktdampfstrom zugeführt wird,
(d) Auftrennen des abgekühlten Rauchgasstroms in einen Rauchgas-Abgasstrom und mindestens einen Rauchgas-Rückführstrom, wobei der Rauchgas-Rückführstrom zu Schritt (a) zurückgeführt wird,
**dadurch gekennzeichnet, dass** der Massenstrom des rückgeführten Rauchgases bei sinkendem Massenstrom des Synthesegas-Produktgases in der Weise erhöht wird, dass durch Erhöhung des zweiten Teildampfstroms ein konstanter Produktdampfstrom erhalten wird.

2. Verfahren zur Herstellung eines Synthesegas-Produktgases und mindestens eines Produktdampfstromes durch katalytisches Dampfreformieren eines kohlenwasserstoffhaltigen Einsatzes in einem Dampfreformer, wobei der Dampfreformer eine Vielzahl von Katalysator enthaltenden Reformerrohre und einen Reformerofen mit Brennern zur Befeuerung der Reformerrohre umfaßt, wobei der heiße Synthesegas-Produktgasstrom in mindestens einem Wärmetauscher im indirekten Wärmetausch gegen einen Wasserstrom unter Bildung eines abgekühlten Synthesegas-Produktgasstroms und eines ersten Teildampfstroms abgekühlt wird, wobei der erste Teildampfstrom dem Produktdampfstrom zugeführt wird,
und wobei der Betrieb des Reformierungsofens folgende Schritte umfaßt:
(a) Zuführen von Brennstoff, Verbrennungsluft und mindestens eines RauchgasRückführstroms zum Reformerofen unter Bildung eines Brennereinsatzes,
(b) Verbrennen des Brennereinsatzes in den Brennern unter Bildung eines heißen Rauchgasstroms,
(c) Abkühlen des heißen Rauchgasstroms in mindestens einem Wärmetauscher im indirekten Wärmetausch gegen einen Wasserstrom unter Bildung eines abgekühlten Rauchgasstroms und eines zweiten Teildampfstroms, der dem Produktdampfstrom zugeführt wird,
(d) Auftrennen des abgekühlten Rauchgasstroms in einen Rauchgas-Abgasstrom und mindestens einen Rauchgas-Rückführstrom, wobei der Rauchgas-Rückführstrom zu Schritt (a) zurückgeführt wird,
**dadurch gekennzeichnet, dass** der Massenstrom des rückgeführten Rauchgases bei konstantem Massenstrom des Synthesegas-Produktgases in der Weise abgesenkt wird, dass durch Absenkung des zweiten Teildampfstroms ein abgesenkter Produktdampfstrom erhalten wird.

3. Verfahren zur Herstellung eines Synthesegas-Produktgases und mindestens eines Produktdampfstromes durch katalytisches Dampfreformieren eines kohlenwasserstoffhaltigen Einsatzes in einem Dampfreformer, wobei der Dampfreformer eine Vielzahl von Katalysator enthaltenden Reformerrohre und einen Reformerofen mit Brennern zur Befeuerung der Reformerrohre umfaßt, wobei der heiße Synthesegas-Produktgasstrom in mindestens einem Wärmetauscher im indirekten Wärmetausch gegen einen Wasserstrom unter Bildung eines abgekühlten Synthesegas-Produktgasstroms und eines ersten Teildampfstroms abgekühlt wird, wobei der erste Teildampfstrom dem Produktdampfstrom zugeführt wird,
und wobei der Betrieb des Reformierungsofens folgende Schritte umfaßt:
(a) Zuführen von Brennstoff, Verbrennungsluft und mindestens eines RauchgasRückführstroms zum Reformerofen unter Bildung eines Brennereinsatzes,
(b) Verbrennen des Brennereinsatzes in den Brennern unter Bildung eines heißen Rauchgasstroms,
(c) Abkühlen des heißen Rauchgasstroms in mindestens einem Wärmetauscher im indirekten Wärmetausch gegen einen Wasserstrom unter Bildung eines abgekühlten Rauchgasstroms und eines zweiten Teildampfstroms, der dem Produktdampfstrom zugeführt wird,
(d) Auftrennen des abgekühlten Rauchgasstroms in einen Rauchgas-Abgasstrom und mindestens einen Rauchgas-Rückführstrom, wobei der Rauchgas-Rückführstrom zu Schritt (a) zurückgeführt wird,
**dadurch gekennzeichnet, dass** der Massenstrom des rückgeführten Rauchgases bei konstantem Massenstrom des Synthesegas-Produktgases in der Weise erhöht wird, dass durch Erhöhung des zweiten Teildampfstroms ein erhöhter Produktdampfstrom erhalten wird.

4. Verfahren nach Anspruch 1 bis 3, **dadurch gekennzeichnet, dass** die Rückführung des Rauchgas-Rückführstroms mittels einer Fördervorrichtung mit einstellbarer Förderleistung erfolgt.

5. Verfahren nach einem der vorigen Ansprüche, **dadurch gekennzeichnet, dass** der Rauchgas-Rückführstrom der Verbrennungsluft zugegeben wird.

6. Verfahren nach einem der vorigen Ansprüche, **dadurch gekennzeichnet, dass** der Rauchgas-Rückführstrom der Verbrennungsluft vor und/oder nach ihrer Vorerwärmung zugegeben wird.

7. Verfahren nach einem der vorigen Ansprüche, **dadurch gekennzeichnet, dass** als Fördervorrichtung ein Gebläse verwendet wird.

8. Anlage zur Durchführung eines Verfahrens nach einem der vorigen Ansprüche, **gekennzeichnet durch**
- einen Reformerofen mit Brennern und eine Vielzahl von Katalysator enthaltenden Reformerrohren,
- mindestens einen Wärmetauscher zum Abkühlen eines heißen Synthesegas-Produktgasstroms im indirekten Wärmetausch gegen einen Wasserstrom unter Bildung eines abgekühlten heißen Synthesegas-Produktgasstroms und eines ersten Teildampfstroms,
- eine Meßvorrichtung zur Messung des Massenstroms des Synthesegas-Produktgases,
- mindestens einen Wärmetauscher zum Abkühlen eines heißen Rauchgasstroms im indirekten Wärmetausch gegen einen Wasserstrom unter Bildung eines abgekühlten Rauchgasstroms und eines zweiten Teildampfstroms,
- eine Meßvorrichtung zur Messung des Massenstroms des rückgeführten Rauchgases,
- eine Meßvorrichtung zur Messung des Produktdampf-Massenstroms,
- eine Fördervorrichtung mit einstellbarer Förderleistung zur Rückführung des Rauchgas-Rückführstroms zum Reformerofen.

9. Anlage nach Anspruch 9, **dadurch gekennzeichnet, dass** als Fördervorrichtung ein Gebläse verwendet wird.

## Claims

1. A method for producing a synthesis-gas product gas and at least one product vapor stream by catalytic steam reformation of a hydrocarbonaceous feedstock in a steam reformer with variable production capacity of the synthesis-gas product gas, wherein the steam reformer comprises a multitude of catalyst-containing reformer tubes and a reformer furnace with burners for firing the reformer tubes, wherein the hot synthesis-gas product gas stream is cooled in at least one heat exchanger by indirect heat exchange against a stream of water by forming a cooled synthesis-gas product gas stream and a first partial vapor stream, wherein the first partial vapor stream is supplied to the product vapor stream, and
wherein the operation of the reforming furnace comprises the following steps:
(a) supplying fuel, combustion air and at least one flue gas recirculation stream to the reformer furnace by forming a burner feedstock,
(b) burning the burner feedstock in the burners by forming a hot flue gas stream,
(c) cooling the hot flue gas stream in at least one heat exchanger by indirect heat exchange against a stream of water by forming a cooled flue gas stream and a second partial vapor stream which is supplied to the product vapor stream,
(d) separating the cooled flue gas stream into a flue gas waste gas stream and at least one flue gas recirculation stream, wherein the flue gas recirculation stream is recirculated to step (a),
**characterized in that** the mass flow of the recirculated flue gas is increased with decreasing mass flow of the synthesis-gas product gas such that by increasing the second partial vapor stream a constant or approximately constant product vapor stream is obtained.

2. A method for producing a synthesis-gas product gas and at least one product vapor stream by catalytic steam reformation of a hydrocarbonaceous feedstock in a steam reformer, wherein the steam reformer comprises a multitude of catalyst-containing reformer tubes and a reformer furnace with burners for firing the reformer tubes, wherein the hot synthesis-gas product gas stream is cooled in at least one heat exchanger by indirect heat exchange against a stream of water by forming a cooled synthesis-gas product gas stream and a first partial vapor stream, wherein the first partial vapor stream is supplied to the product vapor stream, and
wherein the operation of the reforming furnace comprises the following steps:
(a) supplying fuel, combustion air and at least one flue gas recirculation stream to the reformer furnace by forming a burner feedstock,
(b) burning the burner feedstock in the burners by forming a hot flue gas stream,
(c) cooling the hot flue gas stream in at least one heat exchanger by indirect heat exchange against a stream of water by forming a cooled flue gas stream and a second partial vapor stream which is supplied to the product vapor stream,
(d) separating the cooled flue gas stream into a flue gas waste gas stream and at least one flue gas recirculation stream, wherein the flue gas recirculation stream is recirculated to step (a),
**characterized in that** the mass flow of the recirculated flue gas is decreased with a constant mass flow of the synthesis-gas product gas such that by decreasing the second partial vapor stream a decreased product vapor stream is obtained.

3. A method for producing a synthesis-gas product gas and at least one product vapor stream by catalytic steam reformation of a hydrocarbonaceous feedstock in a steam reformer, wherein the steam reformer comprises a multitude of catalyst-containing reformer tubes and a reformer furnace with burners for firing the reformer tubes, wherein the hot synthesis-gas product gas stream is cooled in at least one heat exchanger by indirect heat exchange against a stream of water by forming a cooled synthesis-gas product gas stream and a first partial vapor stream, wherein the first partial vapor stream is supplied to the product vapor stream, and
wherein the operation of the reforming furnace comprises the following steps:
(a) supplying fuel, combustion air and at least one flue gas recirculation stream to the reformer furnace by forming a burner feedstock,
(b) burning the burner feedstock in the burners by forming a hot flue gas stream,
(c) cooling the hot flue gas stream in at least one heat exchanger by indirect heat exchange against a stream of water by forming a cooled flue gas stream and a second partial vapor stream which is supplied to the product vapor stream,
(d) separating the cooled flue gas stream into a flue gas waste gas stream and at least one flue gas recirculation stream, wherein the flue gas recirculation stream is recirculated to step (a),
**characterized in that** the mass flow of the recirculated flue gas is increased with a constant mass flow of the synthesis-gas product gas such that by increasing the second partial vapor stream an increased product vapor stream is obtained.

4. The method according to claims 1 to 3, **characterized in that** the recirculation of the flue gas recirculation stream is effected by means of a conveying device with adjustable conveying capacity.

5. The method according to any of the preceding claims, **characterized in that** the flue gas recirculation stream is added to the combustion air.

6. The method according to any of the preceding claims, **characterized in that** the flue gas recirculation stream is added to the combustion air before and/or after preheating the same.

7. The method according to any of the preceding claims, **characterized in that** a blower is used as conveying device.

8. A plant for carrying out a method according to any of the preceding claims, **characterized by**
- a reformer furnace with burners and a multitude of catalyst-containing reformer tubes,
- at least one heat exchanger for cooling a hot synthesis-gas product gas stream by indirect heat exchange against a stream of water by forming a cooled hot synthesis-gas product gas stream and a first partial vapor stream,
- a measuring device for measuring the mass flow of the synthesis-gas product gas,
- at least one heat exchanger for cooling a hot flue gas stream by indirect heat exchange against a stream of water by forming a cooled flue gas stream and a second partial vapor stream,
- a measuring device for measuring the mass flow of the recirculated flue gas,
- a measuring device for measuring the product vapor mass flow,
- a conveying device with adjustable conveying capacity for recirculating the flue gas recirculation stream to the reformer furnace.

9. The plant according to claim 8, **characterized in that** a blower is used as conveying device.

## Revendications

1. Procédé de production d'un gaz de synthèse - gaz de produit et d'au moins un courant de vapeur de produit par reformage catalytique à la vapeur d'une charge contenant des hydrocarbures dans un reformeur à la vapeur avec capacité de production variable du gaz de synthèse - gaz de produit, dans lequel le reformeur à la vapeur comprend une pluralité de tubes de reformage contenant du catalyseur et un four de reformage ayant des brûleurs d'alimentation des tubes de reformage, le courant chaud de gaz de synthèse - gaz de produit étant refroidi dans au moins un échangeur de chaleur, en échange de chaleur indirect avec un courant d'eau, avec formation d'un courant refroidi de gaz de synthèse - gaz de produit et d'un premier courant partiel de vapeur, le premier courant partiel de vapeur étant envoyé au courant de vapeur de produit,
et dans lequel le fonctionnement du four de reformage comprend les stades suivants :
(a) envoi de combustible, d'air de combustion et d'au moins un courant de recyclage de gaz de fumée au four de reformage avec formation d'une charge de brûleur,
(b) combustion de la charge de brûleur dans les brûleurs avec formation d'un courant chaud de gaz de fumée,
(c) refroidissement du courant chaud de gaz de fumée dans au moins un échangeur de chaleur en échange de chaleur indirect avec un courant d'eau, avec formation d'un courant refroidi de gaz de fumée et d'un deuxième courant partiel de vapeur, qui est envoyé au courant de vapeur de produit,
(d) séparation du courant refroidi de gaz de fumée en un courant d'évacuation de gaz de fumée et en au moins un courant de recyclage de gaz de fumée, le courant de recyclage de gaz de fumée étant renvoyé au stade (a),
**caractérisé en ce que** le courant massique du gaz de fumée renvoyé est, lorsque le courant massique du gaz de synthèse - gaz de produit s'abaisse, augmenté de manière à obtenir, par l'augmentation du deuxième courant partiel de vapeur, un courant constant de vapeur de produit.

2. Procédé de production d'un gaz de synthèse - gaz de produit et d'au moins un courant de vapeur de produit par reformage catalytique à la vapeur d'une charge contenant des hydrocarbures dans un reformeur à la vapeur, dans lequel le reformeur à la vapeur comprend une pluralité de tubes de reformage contenant du catalyseur et un four de reformage ayant des brûleurs d'alimentation des tubes de reformage, le courant chaud de gaz de synthèse - gaz de produit étant refroidi dans au moins un échangeur de chaleur, en échange de chaleur indirect avec un courant d'eau, avec formation d'un courant refroidi de gaz de synthèse - gaz de produit et d'un premier courant partiel de vapeur, le premier courant partiel de vapeur étant envoyé au courant de vapeur de produit,
et dans lequel le fonctionnement du four de reformage comprend les stades suivants :
(a) envoi de combustible, d'air de combustion et d'au moins un courant de recyclage de gaz de fumée au four de reformage avec formation d'une charge de brûleur,
(b) combustion de la charge de brûleur dans les brûleurs avec formation d'un courant chaud de gaz de fumée,
(c) refroidissement du courant chaud de gaz de fumée dans au moins un échangeur de chaleur en échange de chaleur indirect avec un courant d'eau, avec formation d'un courant refroidi de gaz de fumée et d'un deuxième courant partiel de vapeur, qui est envoyé au courant de vapeur de produit,
(d) séparation du courant refroidi de gaz de fumée en un courant d'évacuation de gaz de fumée et en au moins un courant de recyclage de gaz de fumée, le courant de recyclage de gaz de fumée étant renvoyé au stade (a),
**caractérisé en ce que** l'on diminue le courant massique du gaz de fumée recyclé, à courant massique constant du gaz de synthèse - gaz de produit, de manière à obtenir, par la diminution du deuxième courant partiel de vapeur, un courant diminué de vapeur de produit.

3. Procédé de production d'un gaz de synthèse - gaz de produit et d'au moins un courant de vapeur de produit par reformage catalytique à la vapeur d'une charge contenant des hydrocarbures dans un reformeur à la vapeur, dans lequel le reformeur à la vapeur comprend une pluralité de tubes de reformage contenant du catalyseur et un four de reformage ayant des brûleurs d'alimentation des tubes de reformage, le courant chaud de gaz de synthèse - gaz de produit étant refroidi dans au moins un échangeur de chaleur, en échange de chaleur indirect avec un courant d'eau, avec formation d'un courant refroidi de gaz de synthèse - gaz de produit et d'un premier courant partiel de vapeur, le premier courant partiel de vapeur étant envoyé au courant de vapeur de produit,
et dans lequel le fonctionnement du four de reformage comprend les stades suivants :
(a) envoi de combustible, d'air de combustion et d'au moins un courant de recyclage de gaz de fumée au four de reformage avec formation d'une charge de brûleur,
(b) combustion de la charge de brûleur dans les brûleurs avec formation d'un courant chaud de gaz de fumée,
(c) refroidissement du courant chaud de gaz de fumée dans au moins un échangeur de chaleur en échange de chaleur indirect avec un courant d'eau, avec formation d'un courant refroidi de gaz de fumée et d'un deuxième courant partiel de vapeur, qui est envoyé au courant de vapeur de produit,
(d) séparation du courant refroidi de gaz de fumée en un courant d'évacuation de gaz de fumée et en au moins un courant de recyclage de gaz de fumée, le courant de recyclage de gaz de fumée étant renvoyé au stade (a),
**caractérisé en ce que** l'on augmente la courant massique du gaz de fumée recyclé, à courant massique constant du gaz de synthèse - gaz de produit, de manière à obtenir, par l'augmentation du deuxième courant partiel de vapeur, un courant augmenté de vapeur de produit.

4. Procédé suivant la revendication 1 à 3, **caractérisé en ce que** l'on effectue le recyclage du courant de gaz de fumée recyclé au moyen d'un dispositif de transport à puissance de transport réglable.

5. Procédé suivant l'une des revendications précédentes, **caractérisé en ce que** l'on ajoute le courant recyclé de gaz de fumée à l'air de combustion.

6. Procédé suivant l'une des revendications précédentes, **caractérisé en ce que** l'on ajoute le courant recyclé de gaz de fumée à l'air de combustion avant et/ou après son préchauffage.

7. Procédé suivant l'une des revendications précédentes, **caractérisé en ce que** l'on utilise une soufflante comme dispositif de transport.

8. Installation pour effectuer un procédé suivant l'une de revendications précédentes, **caractérisée par**
- un four de reformage ayant des brûleurs et une pluralité de tubes de reformage contenant du catalyseur,
- au moins un échangeur de chaleur pour le refroidissement d'un courant chaud de gaz de synthèse - gaz de produit, en échange de chaleur indirect avec un courant d'eau, avec formation d'un courant chaud refroidi de gaz de synthèse - gaz de produit et d'un premier courant partiel de vapeur,
- un dispositif de mesure pour la mesure du courant massique du gaz de synthèse - gaz de produit,
- au moins un échangeur de chaleur pour le refroidissement d'un courant chaud de gaz de fumée, en échange de chaleur indirect avec un courant d'eau, avec formation d'un courant refroidi de gaz de fumée et d'un deuxième courant partiel de vapeur,
- un dispositif de mesure pour la mesure du courant massique du gaz de fumée recyclé,
- un dispositif de mesure pour la mesure du courant massique de vapeur de produit,
- un dispositif de transport à puissance de transport réglable pour le recyclage du gaz de fumée - courant recyclé au four de reformage.

9. Installation suivant la revendication 8, **caractérisée en ce qu'**une soufflante est utilisée comme dispositif de transport.
